# EUROPÄISCHE PATENTSCHRIFT

(11) **EP 4 469 818 B1**
(45) Veröffentlichungstag und Bekanntmachung des Hinweises auf die Patenterteilung: **02.12.2026**
(21) Anmeldenummer: 23700967.5
(22) Anmeldetag: 13.01.2023
(51) Int. Cl.: G01S 7/497, G01S 7/481, G01S 17/42

(54) **MOBILES, SELBSTFAHRENDES GERÄT**
MOBILE, SELF-PROPELLED DEVICE
DISPOSITIF MOBILE AUTOMOTEUR

(30) Priorität: 27.01.2022 DE 102022200929
(43) Veröffentlichungstag der Anmeldung: 04.12.2024
(73) Patentinhaber: BSH Hausgeräte GmbH, 81739 München (DE)
(72) Erfinder: MOELTER, Markus, 97618 Hollstadt (DE); SCHNITZER, Frank, 97616 Bad Neustadt (DE); DANIEL, Kristina, 97616 Bad Neustadt (DE)
(86) Internationale Anmeldenummer: PCT/EP2023/050742
(87) Internationale Veröffentlichungsnummer: WO 2023/143932

(56) Entgegenhaltungen:
- WO-A1-2021/045001
- CN-A- 113 331 739
- DE-U1- 202014 101 940
- US-A1- 2011 286 009
- US-A1- 2014 151 535
- US-A1- 2020 041 625
- US-A1- 2020 383 546
- US-A1- 2020 405 111

## Beschreibung

Die Erfindung betrifft ein Verfahren zum Betrieb eines mobilen, selbstfahrenden Geräts, insbesondere eines Bodenreinigungsgeräts zur autonomen Bearbeitung von Bodenflächen wie ein Saug- und/oder Kehr- und/oder Wischroboter, das ein Gerätegehäuse und eine Detektionseinrichtung umfasst.

Mobile, selbstfahrende Geräte wie beispielsweise Saugroboter haben die Aufgabe, autonom eine Bodenfläche zu reinigen, um so einem Nutzer Arbeit abzunehmen. Häufig besitzen derartige Geräte eine systematische Navigation, womit sich das Gerät in seiner Umgebung lokalisieren und positionieren kann. Um eine autonome und effiziente Reinigung der Bodenfläche zu gewährleisten, finden in den Saugrobotern zur Kartierung ihrer Umgebung und zur Erkennung von Hindernissen häufig Kamerasysteme oder beleuchtungsunabhängige Laser-basierte Sensoren Verwendung. Laser-basierte Sensoren werden dabei meist auf einer Oberseite des Saugroboters montiert, rotieren um eine feste Achse und nehmen Messwerte in einer horizontalen Ebene auf.

Für eine fehlerfreie Lokalisierung ist es notwendig, dass die Position und Orientierung des Laser-basierten Sensors relativ zum Gerätegehäuse des mobilen, selbstfahrenden Geräts bekannt sind. Weiterhin ist es notwendig, dass dem Laser-basierten Sensor bekannt ist, in welche Richtung ein Messstrahl relativ zu seiner Umgebung gerichtet ist, um diese Information der gemessenen Entfernung hinzuzufügen. Eine Entfernungsmessung ohne korrekte Richtungsangabe kann nachteilig dazu führen, dass das mobile, selbstfahrende Gerät sich nicht oder falsch lokalisiert und/oder dass fehlerhafte Umgebungskarten aufgebaut werden. Daher ist es vorteilhaft, über die gesamte Lebensdauer des mobilen, selbstfahrenden Geräts für den Laser-basierten Sensor dessen Orientierung sicherzustellen beziehungsweise eine Änderung in dessen Orientierung ermitteln zu können.

In der Regel werden die Laser-basierten Sensoren während der Produktion einmalig kalibriert und verbleiben anschließend mit diesen Werten über ihre restliche Laufzeit. Durch Verschleiß oder Verzug von Bauteilen, durch Montagefehler, oder ähnliches können Eigenschaften des Laser-basierten Sensors über die Laufzeit jedoch von den in der Produktion kalibrierten Werten abweichen. Das kann unter anderem die Orientierung des Laser-basierten Sensors an sich betreffen, insbesondere in Bezug auf dessen Position im Gerätegehäuse. Weiter können sich dadurch Abweichungen in den Rotationsparametern des Laser-basierten Sensors, beispielsweise in der Drehgeschwindigkeit des Motors des Laser-basierten Sensors, ergeben, wodurch Messstrahlen nicht mehr der korrekten Richtung zugeordnet werden können.

Häufig umfassen mobile, selbstfahrende Geräte einen LIDAR-Sensor für die Navigation, der auf einer Oberseite des Gerätegehäuses angeordnet ist, sich um 360° dreht und eine horizontale Ebene knapp über der Oberseite des mobilen, selbstfahrenden Geräts scannt. Zum Schutz des LIDAR-Sensors, zum Beispiel vor herabfallenden Gegenständen, und zum Schutz vor Kollisionen mit Möbelstücken können Abdeckungen, beispielsweise Deckel, über dem LIDAR-Sensor angeordnet sein. Diese Abdeckungen werden meist von Stegelementen getragen. Dort, wo die Stegelemente angeordnet sind, kann der LIDAR-Sensor keine Entfernungswerte zur Umgebung ermitteln, da messende Laserstrahlen von den Stegelementen blockiert werden. Es entstehen sogenannte blinde Flecken im Messbereich des LIDAR-Sensors.

Die Stegelemente sind herkömmlicherweise identisch in ihrer Ausbildung und in jeweils gleichen Abständen zueinander an der Abdeckung befestigt. Die Öffnungswinkel zwischen den Stegelementen sind daher im Wesentlichen identisch. Diese Gleichgestaltung und Gleichverteilung der Stegelemente liefert bei der Bestimmung der Orientierung nachteilig ein mehrdeutiges Ergebnis, wodurch eine eindeutige Orientierungsbestimmung nicht möglich ist.

Aus den Druckschriften US 2020/405111 A1, CN 113 331 739 A, US 2020/041625 A1 und US 2020/0383546 A1 sind Sensoren beispielsweise eines mobilen, selbstfahrenden Geräts bekannt, die zum Schutz eine Abdeckung umfassen, die von Stegelementen getragen wird.

Aufgabe vorliegender Erfindung ist es, ein Betriebsverfahren eines mobilen, selbstfahrenden Geräts bereitzustellen, bei dem die Orientierung der Detektionseinrichtung im Gerätegehäuse über die gesamte Laufzeit des mobilen, selbstfahrenden Geräts überwacht und nachkalibriert werden kann, um stets eine möglichst optimale Richtungsinformation zu den Messwerten der Detektionseinrichtung erhalten zu können.

Diese Aufgabe wird durch ein Verfahren zum Betrieb eines mobilen, selbstfahrenden Geräts mit den Merkmalen des Anspruchs 1. Vorteilhafte Ausgestaltungen und Weiterbildungen sind Gegenstand der Unteransprüche.

Erfindungsgemäß umfasst ein Verfahren zum Betrieb eines mobilen, selbstfahrenden Geräts, insbesondere eines Bodenreinigungsgeräts zur autonomen Bearbeitung von Bodenflächen, wie ein Saug- und/oder Kehr- und/oder Wisch- und/oder Rasenmähroboter, ein Gerätegehäuse und eine Detektionseinrichtung. Die Detektionseinrichtung ist dazu ausgerichtet, sich relativ zum Gerätegehäuse um eine Drehachse zu drehen. Eine Abdeckung ist oberhalb der Detektionseinrichtung angeordnet und von einer Mehrzahl von Stegelementen gestützt. Die Stegelemente unterscheiden sich jeweils in ihrer Ausbildung und/oder Position relativ zur Detektionseinrichtung. Die Detektionseinrichtung wird mithilfe ihrer Messstrahlen kalibriert und/oder auf Fehler überprüft, indem mithilfe der unterschiedlichen Ausbildung und/oder Position der Stegelemente eine Orientierung der Detektionseinrichtung relativ zum Gerätegehäuse bestimmt wird.

Erfindungsgemäß wird insbesondere die Orientierung der Detektionseinrichtung auf dem Gerätegehäuse bestimmt und überwacht, indem Messstrahlen, die durch die Stegelemente der Abdeckung blockiert werden, genutzt werden. Die Lage der Stegelemente um die Detektionseinrichtung und/oder ihre Gestaltung sind dabei so gewählt, dass die Orientierung der Detektionseinrichtung mit optimaler und/oder höchstmöglicher Genauigkeit bestimmt werden kann. Die Anzahl von Messstrahlen, die durch die Stegelemente blockiert sind und daher keinen gültigen oder lediglich einen sehr geringen Entfernungsmesswert liefern, ergeben zuverlässige Aussagen zur Richtung der Detektionseinrichtung relativ zum Gerätegehäuse und zu dessen Geschwindigkeit. Hierbei ergeben sich Aussagen nicht nur bei einer vollständigen Umdrehung der Detektionseinrichtung, sondern auch bei einer Drehung in Teilabschnitten, wodurch sich beispielsweise bei unrund laufenden Motoren eine Fehlerreduzierung und insbesondere Fehlererkennung ermöglichen.

Die Detektionseinrichtung scannt die horizontale Ebene knapp über dem mobilen, selbstfahrenden Gerät ab. Dazu rotiert vorzugsweise die Detektionseinrichtung um eine z-Achse durch eine 360°-Rotation. In bevorzugt immer gleichen Intervallen werden Laserstrahlen ausgesendet, die für eine Entfernungsmessung Verwendung finden. Jedem Messstrahl und somit auch jedem Entfernungsmesswert lässt sich eindeutig eine Richtung in Bezug auf die Geräteorientierung zuordnen.

Bei einem gleichmäßig drehenden Motor ergeben sich in gleichmäßigen Winkelabständen Messstrahlen. Ein langsamer oder schnell drehender Motor, der über die Laufzeit veränderte elektrische und/oder mechanische Eigenschaften aufweist, eine zum Beispiel durch Verschleiß und/oder Reibung unrund drehende Detektionseinrichtung, oder eine durch Montagefehler oder sich verziehende Komponenten nicht mehr optimal ausgerichtete Detektionseinrichtung beeinflussen die Messwerte der Detektionseinrichtung, die Genauigkeit der erstellten Umgebungskarte und/oder die Genauigkeit der Lokalisierung.

Durch das Auswerten der Messstrahlen der Detektionseinrichtung, die von Stegelementen blockiert werden, kann darauf geschlossen werden, in welcher Orientierung die Detektionseinrichtung eingebaut ist beziehungsweise in welche Richtungen die zwischen den blockierten Messstrahlen verlaufenden Messstrahlen verlaufen. Unter Einbeziehung der (System-)Zeit, zu welcher die einzelnen Messungen durchgeführt werden, kann auf die Rotationsgeschwindigkeit der Detektionseinrichtung geschlossen werden. Unter Zuhilfenahme der unterschiedlichen Ausbildung beziehungsweise Gestaltung (geometrische Form) und/oder Position der Stegelemente kann so eine über eine Umdrehung variierende Geschwindigkeit der Detektionseinrichtung erkannt werden.

Unter einem mobilen, selbstfahrenden Gerät ist insbesondere ein Bodenreinigungsgerät, beispielsweise Reinigungs- oder Rasenmähergerät, zu verstehen, welches insbesondere im Haushaltsbereich Bodenflächen oder Rasenflächen autonom bearbeitet. Hierunter zählen unter anderem Saug- und/oder Kehr- und/oder Wischroboter wie beispielsweise Staubsaugerroboter, oder Rasenmäherroboter. Diese Geräte arbeiten im Betrieb (Reinigungsbetrieb oder Rasenmäherbetrieb) bevorzugt ohne oder mit möglichst wenig Benutzereingriff. Beispielsweise fährt das Gerät selbsttätig in einen vorgegebenen Raum, um entsprechend einer vorgegebenen und einprogrammierten Verfahrensstrategie den Boden zu bearbeiten.

Unter einem Gerätegehäuse ist insbesondere das äußere Gehäuse des Geräts zu verstehen, dass das Gerät nach außen hin abschließt. Im Inneren des Gerätegehäuses befindet sich also das Innenleben des Geräts. Die Detektionseinrichtung überragt das Gerätegehäuse, beispielsweise in vertikaler beziehungsweise senkrechter Richtung, insbesondere in Z-Richtung. Beispielsweise ist die Detektionseinrichtung auf einer Oberseite in einem mittigen Bereich des Gerätegehäuses angeordnet.

Unter einer Detektionseinrichtung ist jegliche Einrichtung zu verstehen, die dazu geeignet ist, Hindernisse bevorzugt zuverlässig zu detektieren. Diese ist vorzugsweise sensorbasiert, laserbasiert und/oder kamerabasiert. Vorzugsweise ist die Detektionseinrichtung ein LIDAR-Sensor und/oder ein Laserturm, der seine Umgebung in einer horizontalen Ebene durch eine 360°-Rotation abtastet beziehungsweise abscannt. Insbesondere werden von der Detektionseinrichtung in gleichmäßigen Intervallen Messstrahlen, insbesondere Laserstrahlen, ausgesendet, die für eine Entfernungsmessung Verwendung finden. Die Rotation der Detektionseinrichtung erfolgt um eine Drehachse, insbesondere um eine senkrechte Achse, relativ zum Gerätegehäuse und wird durch einen Motor ausgeführt.

Die Detektionseinrichtung ist von einer Oberseite durch eine Abdeckung geschützt vor mechanischen Einwirkungen. Eine Abdeckung ist insbesondere jegliche Abschirmung und/oder Verkapselung, die dazu geeignet ist, mechanische Kräfte von der Detektionseinrichtung fern zu halten beziehungsweise diese hiervon abzuschirmen.

Die Abdeckung ist von einer Mehrzahl von Stegelementen gestützt. Unter Stegelemente sind insbesondere jegliche Elemente zu verstehen, die dazu geeignet sind, die Abdeckung an dem dafür vorgesehenen Bereich zu halten, abzustützen und/oder zu befestigen. Beispielsweise sind die Stegelemente Stützelemente und/oder Stützbeine. Die Stegelemente weisen zueinander insbesondere unterschiedliche Ausbildungen / Gestaltungen (geometrische Formen) und/oder Positionen in Bezug zur Detektionseinrichtung auf. Beispielsweise variieren die Stegelemente in ihrer Breite zueinander. Zwischen den einzelnen Stegelementen bilden sich Öffnungswinkel bezogen auf die Drehachse der Detektionseinrichtung und damit relativ zur Detektionseinrichtung aus. Die Öffnungswinkel zwischen den einzelnen Stegelementen sind dabei vorzugsweise jeweils unterschiedlich groß ausgebildet. Die Stegelemente sind also in unterschiedlichen (Winkel-)Abständen zueinander angeordnet.

Unter einer horizontalen Ebene ist insbesondere jegliche Ebene zu verstehen, die parallel zu einer Bodenfläche und in horizontaler und/oder waagerechter Richtung verläuft. Insbesondere verläuft die horizontale Ebene parallel zur Oberseite des Gerätegehäuses. Vorzugsweise liegt die horizontale Ebene in geringem Abstand, also knapp über der Oberseite des Gerätegehäuses.

Unter Hindernisse sind jegliche Objekte und/oder Gegenstände zu verstehen, die in einem Bodenbearbeitungsbereich angeordnet sind, beispielsweise dort liegen oder stehen, und die Bearbeitung durch das mobile, selbstfahrende Gerät beeinflussen, insbesondere behindern und/oder stören, wie beispielsweise Möbel, Wände, Vorhänge, Teppiche und ähnliches.

Unter einem Bodenbearbeitungsbereich ist jeglicher räumliche Bereich zu verstehen, der zur Bearbeitung, insbesondere Reinigung vorgesehen ist. Das kann beispielsweise ein einzelner (Wohn-) Raum oder eine ganze Wohnung sein. Auch lediglich Bereiche eines (Wohn-) Raums oder einer Wohnung, die zur Reinigung vorgesehen sind, können darunter verstanden werden.

Bevorzugt führt das mobile, selbstfahrende Gerät in dem vorgesehenen Bodenbearbeitungsbereich eine Explorationsfahrt zum Erstellen einer Umgebungskarte durch. Unter einer Explorationsfahrt ist insbesondere eine Erkundungsfahrt zu verstehen, die dazu geeignet ist, eine zu bearbeitende Bodenfläche nach Hindernissen, Raumaufteilung und ähnlichem zu erkunden. Ziel einer Explorationsfahrt ist es insbesondere, Gegebenheiten des zu bearbeitenden Bodenbearbeitungsbereich einschätzen und/oder darstellen zu können.

Nach der Explorationsfahrt kennt das mobile, selbstfahrende Gerät seine Umgebung und kann diese in Form einer Umgebungskarte an den Nutzer weitergeben, zum Beispiel in einer App an einem Mobilgerät. Die detektierten Hindernisse werden vorzugsweise in der Umgebungskarte angezeigt.

Unter einer Umgebungskarte ist insbesondere jegliche Karte zu verstehen, die geeignet ist, die Umgebung des Bodenbearbeitungsbereichs mit all seinen Hindernissen darzustellen. Beispielsweise zeigt die Umgebungskarte den Bodenbearbeitungsbereich mit den darin enthaltenen Hindernissen und Wänden skizzenartig an.

Die Umgebungskarte mit den Hindernissen wird vorzugsweise in der App an einem tragbaren Zusatzgerät dargestellt. Dies dient insbesondere der Visualisierung zu einer möglichen Interaktion für den Nutzer.

Unter einem Zusatzgerät ist vorliegend insbesondere jegliches Gerät zu verstehen, das für einen Benutzer tragbar ist, das außerhalb des mobilen, selbstfahrenden Geräts angeordnet, insbesondere differenziert vom mobilen, selbstfahrenden Gerät ist, und zu einer Anzeige, Bereitstellung, Übermittlung und/oder Übertragung von Daten geeignet ist, wie beispielsweise ein Handy, ein Smartphone, ein Tablet und/oder ein Computer beziehungsweise Laptop.

Auf dem tragbaren Zusatzgerät ist insbesondere eine App, beispielsweise eine Reinigungs-App, installiert, die zur Kommunikation des mobilen, selbstfahrenden Geräts mit dem Zusatzgerät dient und insbesondere eine Visualisierung des Bodenbearbeitungsbereichs, also des zu reinigenden Wohnraums oder des zu reinigenden Wohnbereichs ermöglicht. Die App zeigt dem Nutzer dabei vorzugsweise den zu reinigenden Bereich als Umgebungskarte sowie jegliche Hindernisse und Betriebsbeziehungsweise Reinigungsoptionen an.

Bei einer vorteilhaften Ausführungsform sind jeweils unterschiedlich große Öffnungswinkel bezogen auf die Drehachse zwischen den Stegelementen ausgebildet. Mithilfe der unterschiedlich großen Öffnungswinkel zwischen den Stegelementen der Abdeckung werden eine Position und Orientierung der Detektionseinrichtung relativ zu ihrer Umgebung bestimmt. Insbesondere finden zum Bestimmen Messstrahlen, die von der Detektionseinrichtung ausgesandt und durch die Stegelemente blockiert werden, Verwendung. Insbesondere werden Messstrahlen der Detektionseinrichtung, die von den Stegelementen blockiert werden, dazu verwendet, zu identifizieren, in welcher Orientierung die Detektionseinrichtung relativ zum Gerätegehäuse eingebaut ist und/oder in welche Richtung die zwischen den blockierten Messstrahlen verlaufenden Messstrahlen zeigen.

Bei einer weiteren vorteilhaften Ausführungsform sind die Stegelemente mit einem Versatz zu einem Vielfachen von Winkelabständen zwischen von der Detektionseinrichtung emittierten Messstrahlen zueinander angeordnet. Werden die Stegelemente in Abständen positioniert, die einem Vielfachen der Winkelabstände zwischen den Messstrahlen entsprechen, so liegt die Genauigkeit der Ausrichtung der Detektionseinrichtung lediglich im Bereich eines solchen Winkels. Werden die Stegelemente mit einem Versatz, der einem (Bruch-)Teil dieses Winkels entspricht, verteilt, kann vorteilhafterweise die Ausrichtung der Detektionseinrichtung verbessert bestimmt werden. Beispielsweise können drei Stegelemente mit einem Öffnungswinkel von φ₁=100,33°, φ₂=120,33° und φ₃=139,33° konzipiert werden, um die Genauigkeit des Orientierungswinkels auf 1/3° zu verbessern. Diese Genauigkeit kann mit weiteren Stegelementen weiter verbessert werden, wobei diese Genauigkeit vom kleinsten gemeinsamen Nenner der gewählten Öffnungswinkel abhängt.

Bei einer weiteren vorteilhaften Ausführungsform werden mithilfe der Messstrahlen Fehler der Detektionseinrichtung ermittelt. Insbesondere sind die Fehler eine nicht in der vorgesehenen Geschwindigkeit drehende Detektionseinrichtung, eine nicht optimal ausgerichtete Detektionseinrichtung und/oder eine abgenutzte Detektionseinrichtung. Ein zu langsam oder zu schnell drehender Motor der Detektionseinrichtung, also insbesondere über die Laufzeit veränderte elektrische oder mechanische Eigenschaften, eine durch Verschleiß oder Reibung unrund drehende Detektionseinrichtung oder eine durch Montagefehler oder sich verziehende Komponenten nicht optimal ausgerichtete Detektionseinrichtung können so mit Vorteil ermittelt werden.

Bei einer weiteren vorteilhaften Ausführungsform werden zur Fehlerbestimmung detektierte Werte der Messstrahlen mit vorbestimmten Werten verglichen. Insbesondere kann die Orientierungsbestimmung auf den Messwerten einer vorangegangenen Umdrehung oder auf einer Historie vergangener und aktueller Messungen basieren. Eine Kalibrierung der Detektionseinrichtung wird vorgenommen, sobald neue Messwerte vorliegen oder wenn die ermittelten Messwerte einen vorbestimmten Grenzwert überschreiten. Weiter können mit Vorteil Fehlerfälle detektiert werden, wenn vordefinierte Werte um einen bestimmten (Minimal-) Wert über- oder unterschritten werden.

Messwerte, die einem Stegelement zugeordnet sind, werden insbesondere nicht für die Navigationsalgorithmen verwendet.

Bei einer weiteren vorteilhaften Ausführungsform weisen die Stegelemente jeweils eine unterschiedliche Breite auf. Dadurch kann mit Vorteil die Bestimmung des Orientierungswinkels der Detektionseinrichtung weiter verbessert werden. Die Breite ist dabei auf den Winkelabstand zwischen benachbarten Messstrahlen abgestimmt. Eine Breite, die einem Vielfachen von 1° entspricht, ermöglicht eine Genauigkeit von 1° bei einem Winkelabstand von 1° zwischen benachbarten Messstrahlen. Eine Breite von beispielsweise 1,5° bestimmt die Genauigkeit bei sonst gleichen Voraussetzungen auf etwa 0,5°. Die unterschiedlich breiten Stegelemente blockieren dabei unterschiedlich viele Messstrahlen der Detektionseinrichtung und können so vorteilhafterweise die Gesamtgenauigkeit weiter verbessern, optimieren und/oder vervielfachen.

Bei einer weiteren vorteilhaften Ausführungsform sind die Stegelemente ausbeziehungsweise einfahrbar. Beispielsweise findet eine Abdeckung mit optischen Fenstern Verwendung, wodurch der Sichtbereich der Detektionseinrichtung maximiert ist. Die Stegelemente werden hierbei bei Bedarf, insbesondere zu Zwecken der Kalibrierung beziehungsweise Überprüfung der Detektionseinrichtung, in den Sichtbereich der Detektionseinrichtung gefahren. Zum Beispiel sind die Stegelemente motorisch ausfahrbare Klappen. In diesem Fall ist keine dauerhafte, sondern eine bedarfsgerechte Überprüfung und Kalibrierung gewährleistet, die wiederkehrende und insbesondere nur kurzzeitig störende Einflüsse hat.

Das erfindungsgemäße Verfahren ermöglicht mit Vorteil dauerhaft zuverlässige Messdaten und dadurch bedingt verbesserte Umgebungskartendaten und Navigationsergebnisse. Insbesondere erhöht und verbessert sich die Genauigkeit der Orientierungsbestimmung im Vergleich zu gleichmäßig verteilten Stegelementen der Abdeckung. Dabei ist eine Messung auch lokal, insbesondere zwischen einzelnen Stegelementen möglich, da die vorhandenen Stegelemente aufgrund ihrer einzigartigen Ausprägung eindeutig identifiziert werden können. Auch die Richtung der zwischen den Stegelementen liegenden Messstrahlen ist verbessert bestimmbar, wodurch sich die Gesamtnavigation auch bei unrund drehenden Detektionseinrichtungen verbessert. Insbesondere können über viele Jahre hinweg Bauteiltoleranzen und Komponentenverschleiß detektiert und ausgeglichen werden. Zudem können Fehlerfälle der Detektionseinrichtung einfach und schnell detektiert werden. Dies ist ohne zusätzliche Sensoren, die die Orientierung der Detektionseinrichtung und dessen Drehung überwachen, wie beispielsweise ein Encoder, Absolutwertgeber oder ähnliches, umgesetzt. Durch die Erfindung vereinfacht sich zudem die Montage, da bei der Montage in der Fertigung keine Einbaurichtung beachtet werden muss. Auch ein Austausch der Detektionseinrichtung durch einen Kundendienst ist vereinfacht durchführbar, da keine zusätzliche Kalibrierroutine durchzuführen ist.

Die Erfindung wird anhand der nachfolgenden, lediglich Beispiele darstellenden Ausführungen der Erfindung näher erläutert. Es zeigen:
- Figuren 1A, 1B:: jeweils eine schematische Ansicht eines Ausführungsbeispiels eines mobilen, selbstfahrenden Geräts, das zum Betrieb eines erfindungsgemäßen Verfahrens geeignet ist,
- Figuren 2A, 3A:: jeweils eine schematische Aufsicht auf eine Detektionseinrichtung eines Ausführungsbeispiels eines mobilen, selbstfahrenden Geräts, das zum Betrieb eines erfindungsgemäßen Verfahrens geeignet ist,
- Figuren 2B, 3B:: jeweils eine schematische Aufsicht auf eine Detektionseinrichtung eines Ausführungsbeispiels eines mobilen, selbstfahrenden Geräts im Betrieb, das zum Betrieb eines erfindungsgemäßen Verfahrens geeignet ist,
- Figuren 4A, 4B: jeweils eine schematische Ansicht eines mobilen, selbstfahrenden Geräts gemäß dem Stand der Technik, und
- Figur 5: ein Ablaufdiagramm betreffend ein Ausführungsbeispiel eines erfindungsgemäßen Verfahrens zum Betrieb eines mobilen, selbstfahrenden Geräts.

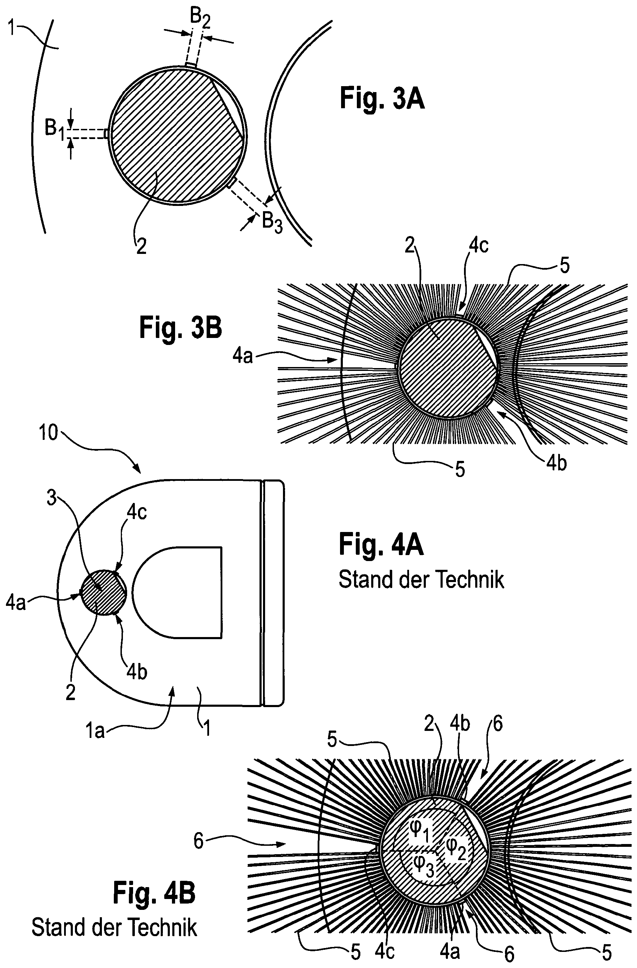

In Figur 4A ist ein herkömmliches mobiles, selbstfahrendes Gerät, insbesondere ein Saugroboter 10, in einer Aufsicht dargestellt, der ein Gerätegehäuse 1 und eine Detektionseinrichtung aufweist. Die Detektionseinrichtung ist vorliegend ein Laserturm, insbesondere ein LIDAR-Sensor 2 (Light detection and ranging - Sensor). Um ein möglichst optimales Reinigungsergebnis zu erzielen, ist der LIDAR-Sensor 2 auf einer Oberseite 1a des Gerätegehäuses 1 angeordnet. Zwar sitzt der LIDAR-Sensor 2 nicht exakt in einer Mitte der Oberseite. Jedoch ist der LIDAR-Sensor 2 in einem mittigen Bereich der Oberseite angeordnet.

Der LIDAR-Sensor 2 umfasst einen Lasersensor, der dafür vorgesehen ist, Laserstrahlung auszusenden. Insbesondere rotiert der Lasersensor im Betrieb um seine senkrechte beziehungsweise vertikale Achse (in Figur 4A erstreckt sich diese Achse mittig im LIDAR-Sensor 2 senkrecht in die Zeichenebene hinein) und nimmt in immer gleichen Intervallen Entfernungsmesswerte auf. Jedem Messstrahl und somit jedem Entfernungsmesswert lässt sich eindeutig eine Richtung in Bezug auf die Saugroboterorientierung zuordnen. Hierzu findet eine Auswerteeinheit Verwendung, die in dem Gerätegehäuse 1 angeordnet ist. Der vorhandene LIDAR-Sensor 2 scannt insbesondere eine horizontale Ebene ab (in Figur 4A befindet sich diese horizontale Ebene in der Zeichenebene), vorzugsweise in einem 360° Winkel, die knapp über der Oberseite 1a des Gerätegehäuses 1 liegt.

Zum Schutz des LIDAR-Sensors 2 vor herabfallenden Gegenständen und vor Kollisionen mit Möbelstücken oder anderen Hindernissen ist eine Abdeckung 3 in Form eines Deckels über dem LIDAR-Sensor 2 angeordnet. Diese Abdeckung 3 ist von Stegelementen 4a, 4b, 4c getragen. Insbesondere finden drei Stegelemente 4a, 4b, 4c Verwendung. Dort, wo Stegelemente angeordnet sind, sind keine Entfernungswerte der Umgebung mit dem LIDAR-Sensor 2 ermittelbar, da die messenden Laserstrahlen 5 von den Stegelementen 4a, 4b, 4c blockiert werden. Es ergeben sich sogenannte blinde Flecken 6 im Messbereich des LIDAR-Sensors 2 (siehe Figur 4B).

Die Stegelemente 4a, 4b, 4c sind mit jeweils gleichen Abständen zueinander an der Abdeckung 3 befestigt. Die Öffnungswinkel φ₁, φ₂ und φ₃ zwischen den Stegelementen sind im Wesentlichen identisch, das bedeutet φ₁ = φ₂ = φ₃. Aufgrund dieser Gleichverteilung der Stegelemente 4a, 4b, 4c ist eine Ermittlung der Orientierung des LIDAR-Sensors 2 bezogen auf das Gerätegehäuse 1 nicht eindeutig möglich.

Um eine derartige Orientierung des LIDAR-Sensors 2 auf dem Saugroboter 10 zu ermöglichen, findet eine ungleich verteilte Anordnung der Stegelemente 4a, 4b, 4c Anwendung, mit Hilfe derer einzelne Öffnungswinkel identifiziert werden können, wie es in Zusammenhang mit den folgenden Figuren beschrieben ist.

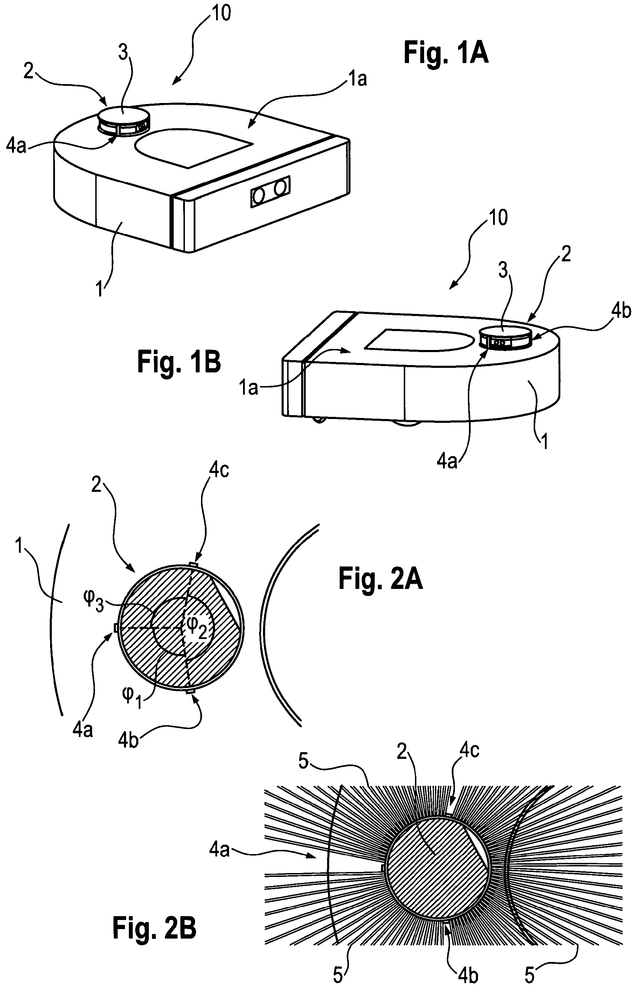

Die Figuren 1A, 1B zeigen schematische Ansichten eines Saugroboters 10, der zum Betrieb eines erfindungsgemäßen Verfahrens geeignet ist, und der ein Gerätegehäuse 1 und einen LIDAR-Sensor 2 auf einer Oberseite 1a des Gerätegehäuses umfasst. Der LIDAR-Sensor 2 ist mit einer Abdeckung 3 ausgerüstet, die den LIDAR-Sensor 2 vor Stößen und Kollisionen schützt. Die Abdeckung 3 ist von drei Stegelementen 4a, 4b, 4c getragen.

Der LIDAR-Sensor 2 tastet im Betrieb seine Umgebung durch eine 360°-Rotation ab. In kleinen Intervallen werden Messstrahlen, insbesondere Laserstahlen, ausgesendet, die für eine Entfernungsmessung verwendet werden. Die Stegelemente 4a, 4b, 4c sind dabei so konzipiert, dass diese gezielt vorbestimmte Messstrahlen blockieren. Die Anzahl der Messstrahlen, die durch ein Stegelement 4a, 4b, 4c blockiert werden, und somit keinen oder lediglich einen sehr geringen Entfernungsmesswert liefern, liefert dabei Aussagen zur Richtung der LIDAR-Sensors 2 relativ zum Gerätegehäuse 1 und zu dessen Rotationsgeschwindigkeit, insbesondere nicht nur über eine komplette Umdrehung, sondern auch in Teilabschnitten der Drehung, was eine Fehlerreduzierung des LIDAR-Sensors 2 zur Folge hat.

Die Stegelemente 4a, 4b, 4c sind dabei in einem Versatz, der einem (Bruch-)Teil des Winkels zwischen den Messstrahlen entspricht, um den Laser des LIDAR-Sensors 2 verteilt. Dies ist insbesondere in Verbindung mit den Figuren 2A, 2B dargestellt. Erfindungsgemäß sind die drei Stegelemente 4a, 4b, 4c in einem Öffnungswinkel φ₁ ≠ φ₂, φ₁ ≠ φ₃ und φ₂ ≠ φ₃ zueinander angeordnet. Beispielsweise sind dabei φ₁ = 120,33°, φ₂ = 139,33° und φ₃ = 100,33°.

Findet eine Auswertung statt, welche Messstrahlen 5 von den Stegelementen 4a, 4b, 4c blockiert werden, kann ermittelt werden, in welcher Orientierung der LIDAR-Sensor 2 eingebaut ist und /oder in welche Richtungen die zwischen den blockierten Strahlen verlaufenden Messstrahlen 5 führen. Mit derart versetzten Winkelabständen kann mit Vorteil die Genauigkeit des Orientierungswinkels des LIDAR-Sensors 2 verbessert werden. Unter Einbeziehung der (System-)Zeit, zu welcher die jeweiligen Messungen durchgeführt werden, kann zudem die Rotationsgeschwindigkeit des LIDAR-Sensors ermittelt werden. Weiter kann unter Zuhilfenahme der verschieden großen Öffnungswinkel φ₁, φ₂, φ₃ zwischen den Stegelementen 4a, 4b, 4c eine über eine Umdrehung variierende Geschwindigkeit des LIDAR-Sensors 2 detektiert werden.

Insbesondere beeinflussen ein zu langsam oder zu schnell drehender Motor mit über die Lebenszeit veränderte elektrische und/oder mechanische Eigenschaften, ein zum Beispiel durch Verschleiß oder Reibung unrund drehender LIDAR-Sensor 2 oder ein durch Montagefehler oder sich verziehende Teile nicht mehr optimal ausgerichteter LIDAR-Sensor 2 die Messwerte des LIDAR-Sensors 2, die Genauigkeit der erstellten Umgebungskarte und die Genauigkeit der Lokalisierung. Durch Auswertung der Messstrahlen 5 des LIDAR-Sensors kann mit Vorteil die Orientierung des LIDAR-Sensors 2 auf dem Gerätegehäuse 1 bestimmt und überwacht werden. Eine regelmäßige und zuverlässige Kalibrierung des LIDAR-Sensors kann vorteilhafterweise erzielt werden.

Die Orientierungsbestimmung kann auf den Messwerten einer Umdrehung oder auf einer Historie vergangener und aktueller Messungen des LIDAR-Sensors 2 basieren. Eine Kalibrierung des LIDAR-Sensors 2 kann vorgenommen werden, sobald neue Werte vorliegen und/oder wenn die ermittelten Werte einen vorbestimmten und/oder festgelegten Grenzwert überschreiten. Weiter können Fehlerfälle detektiert werden, wenn die üblichen beziehungsweise vordefinierten Werte um einen festgelegten Wert über- oder unterschritten werden. Hierbei werden Messwerte, die einem Stegelement 4a, 4b, 4c zugeordnet werden, nicht für die Navigationsalgorithmen verwendet.

Eine weitere Verbesserung der Bestimmung des Orientierungswinkels des LIDAR-Sensors 2 kann durch eine gezielte Breite der Stegelemente 4a, 4b, 4c erfolgen, wie es in den Figuren 3A, 3B dargestellt ist. Die Wahl der Breite der einzelnen Stegelemente 4a, 4b, 4c basiert dabei vorzugsweise auf dem Winkelabstand zwischen benachbarten Messstrahlen 5. Eine Breite von beispielsweise 1,5° ermöglicht bei einem Winkelabstand von 1° zwischen benachbarten Messstrahlen eine Messgenauigkeit auf 0,5° genau. Die unterschiedlich breiten Stegelemente 4a, 4b, 4c blockieren dabei unterschiedlich viele Messstrahlen 5 und vervielfachen so die Gesamtgenauigkeit. Dabei gilt im Idealfall folgende Beziehung der Breite der einzelnen Stegelemente 4a, 4b, 4c: B₁ ≠ B₂, B₁ ≠ B₃ und B₂ ≠ B₃.

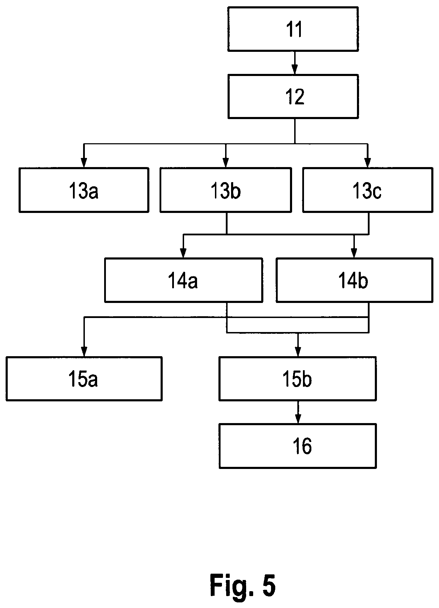

In Figur 5 ist ein prinzipielles Ablaufdiagramm zu vorliegender Erfindung dargestellt. In Schritt 11 werden die einzelnen LIDAR-Messwerte erfasst. Anschließend wird geprüft, ob diese Messwerte innerhalb der Stegelement-Bereiche liegen, oder nicht (Schritt 12). Liegen die Messwerte außerhalb der Stegelemente, werden die Messwerte in die Navigation des mobilen, selbstfahrenden Geräts zugeführt oder die jeweiligen Messwerte verworfen (Schritt 13a). Zudem wird bestimmt, wie viele benachbarte Messwerte zwischen zwei Stegelementen liegen (Schritt 13b). Liegen die Messwerte innerhalb der Stegelemente, wird im Schritt 13c bestimmt, wie viele benachbarte Messwerte einem Stegelement zugeordnet werden können. Mit den benachbarten Messwerten zwischen den Stegelementen und mit jenen den Stegelementen zugeordneten Messwerten kann die Rotationsgeschwindigkeit zwischen den Stegelementen bestimmt werden (Schritt 14a). Zudem kann aus der bekannten Geometrie der Stegelemente abgeleitet werden, welche Gesamtorientierung der LIDAR-Sensor hat (Schritt 14b). Damit kann anschließend geprüft werden, ob ein Fehlerfall des LIDAR-Sensors vorliegt (Schritt 15a). Zudem kann die Richtung der einzelnen Messstrahlen des LIDAR-Sensors bestimmt werden (Schritt 15b). Zuletzt können die Orientierungswerte für die Umgebungskartenerstellung und Lokalisierung genutzt werden (Schritt 16).

## Patentansprüche

1. Verfahren zum Betrieb eines mobilen, selbstfahrenden Geräts (10), insbesondere eines Bodenreinigungsgeräts zur autonomen Bearbeitung von Bodenflächen wie ein Saug- und/oder Kehr- und/oder Wischroboter, wobei
- das Gerät (10) ein Gerätegehäuse (1) und eine Detektionseinrichtung (2) zum Aussenden von Messstrahlen (5) zum Abtasten einer Umgebung des Geräts (10) umfasst,
- die Detektionseinrichtung (2) dazu ausgerichtet ist, sich relativ zum Gerätegehäuse (1) um eine Drehachse zu drehen,
- eine Abdeckung (3) oberhalb der Detektionseinrichtung (2) angeordnet und von einer Mehrzahl von Stegelementen (4a, 4b, 4c) gestützt ist,
- sich die Stegelemente (4a, 4b, 4c) jeweils in ihrer Ausbildung und/oder Position relativ zur Detektionseinrichtung (2) unterscheiden, **dadurch gekennzeichnet, dass**
- die Detektionseinrichtung (2) mithilfe ihrer Messstrahlen (5) kalibriert und/oder auf Fehler überprüft wird, indem mithilfe der unterschiedlichen Ausbildung und/oder Position der Stegelemente (4a, 4b, 4c) eine Orientierung der Detektionseinrichtung (2) relativ zum Gerätegehäuse bestimmt wird.

2. Verfahren nach Anspruch 1, wobei jeweils unterschiedlich große Öffnungswinkel (φ₁, φ₂, φ₃) bezogen auf die Drehachse zwischen den Stegelementen (4a, 4b, 4c) ausgebildet sind, und mithilfe der unterschiedlich großen Öffnungswinkel (φ₁, φ₂, φ₃) die Orientierung der Detektionseinrichtung (2) relativ zum Gerätegehäuse bestimmt wird.

3. Verfahren nach Anspruch 2, wobei zum Bestimmen Messstrahlen (5), die von der Detektionseinrichtung (2) ausgesandt und durch die Stegelemente (4a, 4b, 4c) blockiert werden, Verwendung finden.

4. Verfahren nach Anspruch 3, wobei mithilfe der Messstrahlen (5) Fehler der Detektionseinrichtung (2) ermittelt werden.

5. Verfahren nach Anspruch 4, wobei die Fehler eine nicht in der vorgesehenen Geschwindigkeit drehende Detektionseinrichtung (2), eine nicht optimal ausgerichtete Detektionseinrichtung (2) und/oder eine abgenutzte Detektionseinrichtung (2) sind.

6. Verfahren nach Anspruch 4 oder 5, wobei zur Fehlerbestimmung detektierte Werte der Messstrahlen (5) mit vorbestimmten Werten verglichen werden.

7. Verfahren nach einem der vorhergehenden Ansprüche, wobei die Stegelemente (4a, 4b, 4c) jeweils eine unterschiedliche Breite (B₁, B₂, B₃) aufweisen.

8. Verfahren nach einem der vorhergehenden Ansprüche, wobei die Stegelemente (4a, 4b, 4c) mit einem Versatz zu einem Vielfachen von Winkelabständen zwischen von der Detektionseinrichtung (2) emittierten Messstrahlen (5) zueinander angeordnet sind.

9. Verfahren nach einem der vorhergehenden Ansprüche, wobei die Stegelemente (4a, 4b, 4c) aus- beziehungsweise einfahrbar sind.

## Claims

1. Method for operating a mobile, self-propelled device (10), in particular a floor cleaning device for autonomously treating floor surfaces, such as a vacuuming and/or sweeping and/or mopping robot, wherein
- the device (10) comprises a device housing (1) and a detection facility (2) for outputting measuring beams (5) for scanning an environment of the device (10),
- the detection facility (2) is configured to rotate about an axis of rotation relative to the device housing (1),
- a cover (3) is arranged above the detection facility (2) and is supported by a plurality of web elements (4a, 4b, 4c),
- the web elements (4a, 4b, 4c) differ in each case in terms of their design and/or position relative to the detection facility (2), **characterised in that**
- the detection facility (2) is calibrated and/or monitored for errors by means of its measuring beams (5), by an orientation of the detection facility (2) relative to its environment being determined by means of the variable configuration and/or position of the web elements (4a, 4b, 4c).

2. Method according to claim 1, wherein opening angles (φ₁, φ₂, φ₃) of different sizes relative to the axis of rotation are configured in each case between the web elements (4a, 4b, 4c), and the orientation of the detection facility (2) relative to the device housing is determined by means of the opening angles (φ₁, φ₂, φ₃) of different sizes.

3. Method according to claim 2, wherein measuring beams (5) which are output from the detection facility (2) and blocked by the web elements (4a, 4b, 4c) are used for the determination.

4. Method according to claim 3, wherein errors in the detection facility (2) are determined by means of the measuring beams (5).

5. Method according to claim 4, wherein the errors are a detection facility (2) not rotating at the intended speed, a detection facility (2) not optimally oriented and/or a worn detection facility (2).

6. Method according to claim 4 or 5, wherein detected values of the measuring beams (5) are compared with predetermined values for determining errors.

7. Method according to one of the preceding claims, wherein the web elements (4a, 4b, 4c) in each case have a different width (B₁, B₂, B₃).

8. Method according to one of the preceding claims, wherein the web elements (4a, 4b, 4c) are arranged in relation to one another with an offset to a multiple of the angular spacings between measuring beams (5) emitted by the detection facility (2).

9. Method according to one of the preceding claims, wherein the web elements (4a, 4b, 4c) are configured to be extendable or retractable.

## Revendications

1. Procédé d'exploitation d'un appareil mobile automoteur (10), en particulier d'un appareil de nettoyage de sol pour le traitement autonome de surfaces de sol tel qu'un robot aspirateur et/ou balayeur et/ou nettoyeur, dans lequel :
- l'appareil (10) comprend une carcasse d'appareil (1) et un dispositif de détection (2) pour l'émission de rayons de mesure (5) pour le balayage d'un environnement de l'appareil (10),
- le dispositif de détection (2) est aménagé pour se tourner autour d'un axe de rotation par rapport à la carcasse d'appareil (1),
- un couvercle (3) est disposé au-dessus du dispositif de détection (2) et protégé par une pluralité d'éléments formant âme (4a, 4b, 4c),
- les éléments formant âme (4a, 4b, 4c) se différencient respectivement dans leur formation et/ou position par rapport au dispositif de détection (2), **caractérisé en ce que**
- le dispositif de détection (2) est calibré et/ou vérifié quant à la présence d'erreurs à l'aide de ses rayons de mesure (5), en déterminant à l'aide de la formation et/ou de la position différente des éléments formant âme (4a, 4b, 4c) une orientation du dispositif de détection (2) par rapport à la carcasse d'appareil.

2. Procédé selon la revendication 1, dans lequel des angles d'ouverture différents respectifs (φ1, φ2, φ3) sont formés par rapport à l'axe de rotation entre les éléments formant âme (4a, 4b, 4c) et l'orientation du dispositif de détection (2) par rapport à la carcasse d'appareil est déterminée à l'aide des angles d'ouverture différents (φ1, φ2, φ3).

3. Procédé selon la revendication 2, dans lequel des rayons de mesure (5) émis par le dispositif de détection (2) et bloqués par les éléments formant âme (4a, 4b, 4c) s'utilisent pour la détermination.

4. Procédé selon la revendication 3, dans lequel des erreurs du dispositif de détection (2) sont établies au moyen des rayons de mesure (5).

5. Procédé selon la revendication 4, dans lequel les erreurs sont un dispositif de détection (2) ne tournant pas à la vitesse prévue, un dispositif de détection (2) orienté de façon non optimale et/ou un dispositif de détection (2) usé.

6. Procédé selon la revendication 4 ou 5, dans lequel des valeurs détectées des rayons de mesure (5) sont comparées à des valeurs prédéterminées pour la détermination d'erreurs.

7. Procédé selon l'une des revendications précédentes, dans lequel les éléments formant âme (4a, 4b, 4c) présentent respectivement une largeur différente (B₁, B₂, B₃).

8. Procédé selon l'une des revendications précédentes, dans lequel les éléments formant âme (4a, 4b, 4c) sont disposés l'un par rapport à l'autre selon un déport d'un multiple d'écarts angulaires entre des rayons de mesure (5) émis par le dispositif de détection (2).

9. Procédé selon l'une des revendications précédentes, dans lequel les éléments formant âme (4a, 4b, 4c) sont déployables respectivement rétractables.
